# EUROPÄISCHE PATENTSCHRIFT

(11) **EP 3 197 747 B1**
(45) Veröffentlichungstag und Bekanntmachung des Hinweises auf die Patenterteilung: **01.04.2020**
(21) Anmeldenummer: 15739239.0
(22) Anmeldetag: 15.07.2015
(51) Int. Cl.: B62D 3/12, B62D 7/22

(54) **ZAHNSTANGENLENKUNG FÜR KRAFTFAHRZEUGE**
RACK-AND-PINION STEERING SYSTEM FOR MOTOR VEHICLES
DIRECTION A CRÉMAILLÈRE POUR VÉHICULES AUTOMOBILES

(30) Priorität: 22.09.2014 DE 102014113666
(43) Veröffentlichungstag der Anmeldung: 02.08.2017
(73) Patentinhaber: TRW Automotive GmbH, 73553 Alfdorf (DE)
(72) Erfinder: SPAN, Eduard, 50733 Köln (DE); KOLLOCH, Robert, 41063 Mönchengladbach (DE); NILGEN, Nadja, 40547 Düsseldorf (DE); VON LAAR, Rolf, 41372 Niederkrüchten (DE)
(74) Vertreter: Prinz & Partner mbB
(86) Internationale Anmeldenummer: PCT/EP2015/066109
(87) Internationale Veröffentlichungsnummer: WO 2016/045811

(56) Entgegenhaltungen:
- WO-A1-2010/108891
- DE-A1-102005 050 798
- DE-A1-102007 000 680
- DE-A1-102009 019 890
- FR-A1- 2 966 414
- US-A- 5 788 009

## Beschreibung

Die Erfindung betrifft eine Zahnstangenlenkung für Kraftfahrzeuge, mit einer Zahnstange, die eine Längsachse aufweist, einem Zahnstangengehäuse, in dem die Zahnstange axial verschieblich geführt ist, sowie wenigstens einer im Zahnstangengehäuse aufgenommenen Endanschlag-Dämpfungsbaugruppe für die Zahnstange, wobei die Endanschlag-Dämpfungsbaugruppe einen Kompressionskörper zur Dämpfung eines Endanschlags sowie ein Anschlagelement aufweist, das in axialer Richtung begrenzt verschieblich am Zahnstangengehäuse montiert ist, wobei sich das Anschlagelement in einer ersten Axialrichtung zumindest teilweise über den Kompressionskörper an einer ersten Abstützfläche des Zahnstangengehäuses abstützt.

Eine solche Zahnstangenlenkung ist beispielsweise aus der gattungsgemäßen DE 10 2009 019 890 A1 bekannt. Die Endanschlag-Dämpfungsbaugruppe umfasst dabei wenigstens einen Anschlagring sowie wenigstens einen elastischen Kompressionskörper und lässt sich mit geringem Aufwand im Zahnstangengehäuse der Zahnstangenlenkung montieren.

Die DE 10 2007 000 680 A1 beschreibt eine Lenkvorrichtung für Fahrzeuge mit einem Lenkungsgehäuse, in welchem eine Lenkstange verschieblich angeordnet ist. Das Lenkungsgehäuse ist mit wenigstens einem elastischen Endanschlag versehen.

Die US 5,788,009 A offenbart einen Zahnstangenstopper eines Lenkgetriebegehäuses für ein Fahrzeug. Der Zahnstangenstopper umfasst ein Gehäuse, eine Kolbenstange, die sich von dem Gehäuse nach außen erstreckt und eine Feder zum elastischen Stützen der Kolbenstange in dem Gehäuse.

Die FR 2 966 414 A1 beschreibt ein Lenkgetriebe für ein Fahrzeug mit einem Gehäuse, einer in dem Gehäuse in Längsrichtung verschiebbar angeordneten Zahnstange und eine Abstützung, die die Zahnstange in einer Richtung quer zur Längsrichtung abstützt, wobei die Abstützung in dem Gehäuse in einer Längsrichtung verschiebbar angeordnet ist.

Die WO 2010/108891 A1 offenbart ein Zahnstangengehäuse für eine Servolenkung, welches eine Zahnstange rohrartig umgibt und ein inneres Stützlager aufweist. Das Stützlager ist durch mindestens zwei Querschnittsverengungen des Zahnstangengehäuses in diesem gehalten.

Die DE 10 2005 050 798 A1 beschreibt eine Lenkeinrichtung für ein Kraftfahrzeug, mit einer Lenkstange, die in einem Gehäuse axial verschieblich angeordnet ist. Zur Begrenzung der Axialbewegung in beide Lenkrichtungen sind aus einem elastischen Material gebildete Anschlagelemente vorgesehen.

Aufgabe der Erfindung ist es, eine Zahnstangenlenkung mit einer Endanschlag-Dämpfungsbaugruppe zu schaffen, die konstruktiv besonders einfach aufgebaut und im Betrieb der Zahnstangenlenkung einem besonders geringen Verschleiß unterworfen ist.

Erfindungsgemäß wird diese Aufgabe gelöst durch eine Zahnstangenlenkung der eingangs genannten Art, bei der sich das Anschlagelement in einer entgegengesetzten zweiten Axialrichtung an einer zweiten Abstützfläche des Zahnstangengehäuses abstützt. Zudem ist eine axiale Verschiebung des montierten Anschlagelements durch die erste Abstützfläche und die zweite Abstützfläche des Zahnstangengehäuses begrenzt, wobei das Anschlagelement in seiner ersten axialen Endstellung an der ersten Abstützfläche und in seiner entgegengesetzten zweiten axialen Endstellung an der zweiten Abstützfläche anliegt. Durch die in axialer Richtung begrenzt verschiebliche Montage zwischen zwei entgegengesetzten Abstützflächen des Zahnstangengehäuses definiert das Anschlagelement einen maximalen Dämpfungsweg der Endanschlag-Dämpfungsbaugruppe und stellt darüber hinaus eine zuverlässige Befestigung der Endanschlag-Dämpfungsbaugruppe im Zahnstangengehäuse sicher. Damit ermöglicht das Anschlagelement eine besonders einfache Konstruktion der Endanschlag-Dämpfungsbaugruppe mit wenigen Einzelbauteilen.

Vorzugsweise ist das Anschlagelement ein Kontaktring, der in einer axialen Endanschlagstellung der Zahnstangenlenkung stirnseitig mit der Zahnstange oder einem fest mit der Zahnstange verbundenen Bauteil in Kontakt kommt. Folglich sind eine Befestigungsfunktion für die Endanschlag-Dämpfungsbaugruppe sowie eine Anschlagfunktion für die Zahnstange auf vorteilhafte Weise in einem einzigen Bauteil zusammengeführt.

In einer Ausführungsform der Zahnstangenlenkung weist das Anschlagelement Rastelemente auf und bildet mit dem Zahnstangengehäuse eine Rastverbindung aus. Dies sorgt für eine einfache und zuverlässige Montage der Endanschlag-Dämpfungsbaugruppe am oder im Zahnstangengehäuse.

Das Zahnstangengehäuse hat in dieser Ausführungsform vorzugsweise eine zylindrische Öffnung zur Aufnahme der Zahnstange, wobei in der Öffnung wenigstens eine radiale Ausnehmung ausgebildet ist, in welche sich die Rastelemente des Anschlagelements erstrecken. Solch eine radiale Ausnehmung in der zylindrischen Öffnung des Zahnstangengehäuses lässt sich fertigungstechnisch mit geringem Aufwand realisieren, sodass die Befestigung der Endanschlag-Dämpfungsbaugruppe auch gehäuseseitig mit geringem Aufwand realisierbar ist.

Die radiale Ausnehmung in der zylindrischen Öffnung des Zahnstangengehäuses ist in diesem Fall besonders bevorzugt als umlaufende Nut ausgebildet, wobei eine Nutflanke dieser Nut die zweite Abstützfläche bildet. Eine umlaufende Nut lässt sich in der zylindrischen Öffnung mit geringem fertigungstechnischen Aufwand herstellen und ermöglicht eine zuverlässige axiale Befestigung des Anschlagelements und damit der Endanschlag-Dämpfungsbaugruppe.

Bevorzugt erstrecken sich die erste axiale Abstützfläche und/oder die zweite axiale Abstützfläche im Wesentlichen senkrecht zur Längsachse der Zahnstange. Senkrecht zur Längsachse verlaufende Abstützflächen stellen eine zuverlässige axiale Befestigung des Anschlagelements bzw. der Endanschlag-Dämpfungsbaugruppe sicher und erzeugen bei axialer Beaufschlagung durch das Anschlagelement keine unerwünschte Beanspruchung des Anschlagelements in radialer Richtung.

Das im Zahnstangengehäuse montierte Anschlagelement ist vorzugsweise durch den Kompressionskörper axial gegen die zweite Abstützfläche vorgespannt. Diese Vorspannung stellt zum einen eine definierte axiale Position des Anschlagelements sicher und verhindert zum anderen unerwünschte Klappergeräusche, welche bei Fahrzeug- oder Lenkungsvibrationen durch axiales Spiel des Anschlagelements zwischen den Abstützflächen entstehen könnten.

Bevorzugt ist der Kompressionskörper in einer stirnseitigen axialen Vertiefung des Anschlagelements aufgenommen und ragt axial über das Anschlagelement hinaus. Insbesondere können die axiale Vertiefung eine umlaufende Nut und der Kompressionskörper ein Kompressionsring sein, der in dieser Nut aufgenommen ist. In der axialen Vertiefung ist der Kompressionskörper gut geschützt und lässt sich auf einfache Art und Weise am Anschlagelement positionieren.

Vorzugsweise ist das Anschlagelement als Hilfsabstützung ausgebildet und begrenzt eine Biegung der Zahnstange. Dadurch kann das Anschlagelement bei einer extremen Biegebeanspruchung und einer daraus resultierenden Verformung der Zahnstange ein temporäres, seitliches Zahnstangenlager bilden, welches eine Verformung der Zahnstange begrenzt und damit eine mögliche Beschädigung der Zahnstangenlenkung verhindert.

In einer weiteren Ausführungsform der Zahnstangenlenkung ist das Anschlagelement bezüglich der Längsachse im Wesentlichen drehfest im Zahnstangengehäuse fixiert. Ein vom Fahrer aufgebrachtes Lenkmoment wird bei Zahnstangenlenkungen über ein Ritzel sowie eine mit dem Ritzel in Eingriff stehende Verzahnung der Zahnstange an lenkbare Räder des Kraftfahrzeugs weitergeleitet, wobei die Verzahnung der Zahnstange insbesondere eine Schrägverzahnung ist. Es hat sich herausgestellt, dass die Endanschlag-Dämpfungsbaugruppe im Endanschlag der Zahnstangenlenkung eine erhebliche Torsionsbelastung durch die Zahnstange erfährt. Diese Torsionsbelastung ist darauf zurückzuführen, dass die Zahnstange bei der Kraftübertragung vom Ritzel auf die Zahnstangenverzahnung um ihre Längsachse verdreht wird. Bringt der Fahrer im Endanschlag der Zahnstangenlenkung weiterhin ein Lenkmoment in Richtung zum Endanschlag auf, steigt die Kontaktkraft zwischen dem Ritzel und der Zahnstangenverzahnung so stark an, dass in der Endanschlag-Dämpfungsbaugruppe eine Torsion von bis zu etwa 5° und Torsionsmomente von etwa 30 bis 40 Nm auftreten können. Diese Torsionsbeanspruchung im Endanschlag der Zahnstangenlenkung würde maßgeblich zum Verschleiß des Kompressionskörpers beitragen und dessen Lebensdauer erheblich verringern. Aufgrund der in Umfangsrichtung drehfesten Lagerung des Anschlagelements im Zahnstangengehäuse erfährt jedoch allenfalls das vergleichsweise robuste Anschlagelement und nicht der empfindlichere Kompressionskörper eine Torsionsbeanspruchung, sodass sich die Lebensdauer und damit die Austauschintervalle der Endanschlag-Dämpfungsbaugruppe verlängern.

Vorzugsweise ist das Anschlagelement ein Kunststoffring, insbesondere aus Polyamid. Kunststoffringe sind einfach und preiswert herstellbar sowie bei geeigneter Materialwahl hinreichend robust, um die auftretenden Torsions- und axialen Stoßbelastungen zuverlässig und dauerhaft aufnehmen und weiterleiten zu können.

In einer weiteren Ausführungsform der Zahnstangenlenkung sind der Kompressionskörper und das Anschlagelement ringförmig ausgebildet und konzentrisch zur Längsachse angeordnet.

Ein Innendurchmesser des ringförmigen Anschlagelements kann in diesem Fall insbesondere kleiner als ein Innendurchmesser des ringförmigen Kompressionskörpers sein. Auf diese Weise ist mit geringem Aufwand sichergestellt, dass das Anschlagelement bei einer extremen Biegebeanspruchung der Zahnstange eine Hilfsabstützung für die Zahnstange bildet, wohingegen der Kompressionskörper aufgrund des größeren Innendurchmessers nicht mit der Zahnstange in Kontakt kommt. Somit wird ein unerwünschter Verschleiß des Kompressionskörpers zuverlässig verhindert. Die zusätzliche Stützfläche, welche das Anschlagelement für die Zahnstange bildet, verhindert in diesem Fall eine übermäßige Biegebeanspruchung der Zahnstange und eine daraus resultierende Beschädigung oder Funktionsbeeinträchtigung der Zahnstangenlenkung.

Der Kompressionskörper ist bevorzugt aus einem Elastomer hergestellt, insbesondere aus Gummi oder Polyurethan. Derartige Kompressionskörper lassen sich einfach und preiswert herstellen und weisen darüber hinaus dauerhaft gute und im Wesentlichen konstante Dämpfungseigenschaften auf.

In einer weiteren Ausführungsform der Zahnstangenlenkung ist der Kompressionskörper mit dem Anschlagelement reibschlüssig verbunden und/oder verklebt und/oder verrastet. Diese Verbindungsvarianten stellen einzeln oder in Kombination einfache und preiswerte Möglichkeiten dar, den Kompressionskörper unverlierbar am Anschlagelement zu fixieren.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine schematische Skizze einer erfindungsgemäßen Zahnstangenlenkung;
- Figur 2 einen Bereich "A" der Zahnstangenlenkung gemäß Figur 1 im Detailschnitt;
- Figur 3 eine perspektivische Explosionsansicht einer Endanschlag-Dämpfungsbaugruppe für die Zahnstangenlenkung gemäß Figur 2;
- Figur 4 eine perspektivische Ansicht der zusammengesetzten Endanschlag-Dämpfungsbaugruppe gemäß Figur 3 zur Montage in einem Zahnstangengehäuse der Zahnstangenlenkung gemäß Figur 2;
- Figur 5 ein Schnittdetail der montierten Endanschlag-Dämpfungsbaugruppe aus Figur 4; und
- Figur 6 ein weiteres Schnittdetail der montierten Endanschlag-Dämpfungsbaugruppe aus Figur 4.

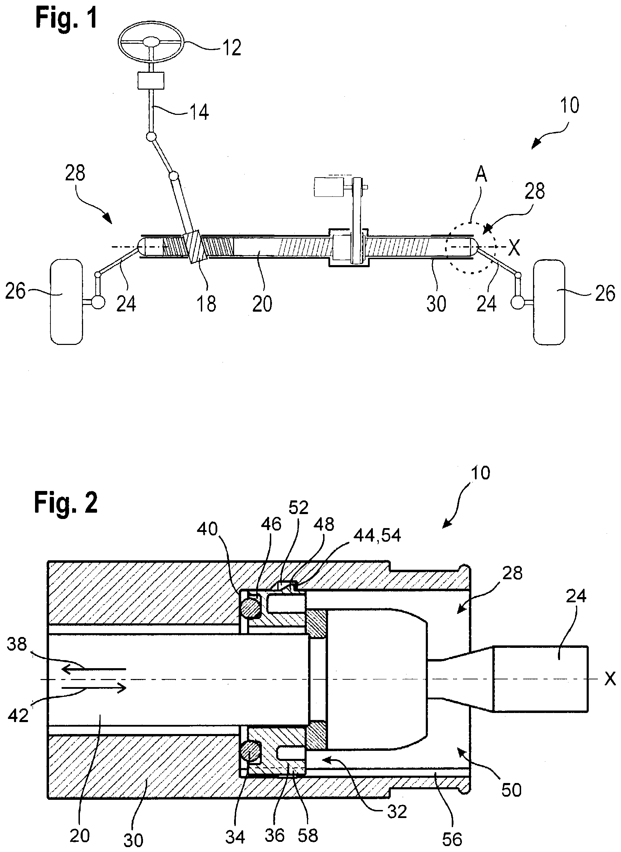

Die Figur 1 zeigt eine Zahnstangenlenkung 10 für Kraftfahrzeuge. Im dargestellten Ausführungsbeispiel ist die Zahnstangenlenkung 10 Teil eines elektrohydraulischen Fahrzeuglenksystems, bei dem ein Lenkrad 12 über eine Lenksäule 14 mit einem Ritzel 18 verbunden ist. Das Ritzel 18 kämmt mit einer Zahnstange 20, sodass diese durch eine am Lenkrad 12 aufgebrachte, manuelle Lenkkraft beaufschlagt wird.

Außerdem ist ein Elektromotor 16 vorgesehen, der die Zahnstange 20 über einen Kugelgewindetrieb 21 in bekannter Art und Weise mit einer elektrischen Lenkhilfskraft beaufschlagen kann. Die Lenkhilfskraft wird dabei vom Elektromotor 16 über einen Riemen 22 und eine Kugelumlaufmutter 23 in einen Gewindeabschnitt 25 der Zahnstange 20 eingeleitet, wobei sich die Kugelumlaufmutter 23 über ein Vierpunktlager an einem Zahnstangengehäuse 30 der Zahnstangenlenkung 10 abstützt.

Alternativ kann die Lenkhilfskraft auch anders aufgebracht werden, beispielsweise mittels eines hydraulischen Stellzylinders.

An ihren axialen Enden ist die Zahnstange 20 über Spurstangen 24 mit lenkbaren Rädern 26 eines Kraftfahrzeugs gekoppelt, wobei die Zahnstange 20 durch jeweils ein Kugelgelenk 28 mit den Spurstangen 24 verbunden ist. In einem Verbindungsbereich "A" zwischen Zahnstange 20 und Spurstange 24 ist an einem Zahnstangengehäuse 30 ein Endanschlag für die Zahnstange 20 ausgebildet, wobei durch den Endanschlag ein maximaler Lenkeinschlag definiert ist. Bei einer Lenkbewegung bis zum Endanschlag treten hohe mechanische Beanspruchungen in der Zahnstangenlenkung 10 auf. Um Schäden an der Lenkung zu vermeiden, ist daher üblicherweise eine Dämpfung im Bereich des Endanschlags vorgesehen.

Eine besonders vorteilhafte Endanschlag-Dämpfungsbaugruppe 32 ist in der Figur 2 dargestellt, welche den Bereich "A" aus Figur 1 im Schnitt zeigt.

Die Zahnstangenlenkung 10 umfasst gemäß Figur 2 die Zahnstange 20, welche eine Längsachse X aufweist, das Zahnstangengehäuse 30, in dem die Zahnstange 20 zwischen zwei Endanschlägen axial verschieblich geführt ist, sowie wenigstens eine im Zahnstangengehäuse 30 aufgenommene Endanschlag-Dämpfungsbaugruppe 32 für die Zahnstange 20, welche in axialer Richtung am Zahnstangengehäuse 30 angebracht ist.

Die Endanschlag-Dämpfungsbaugruppe 32 weist dabei einen Kompressionskörper 34 zur Dämpfung eines Endanschlags sowie ein Anschlagelement 36 auf, das zur Befestigung der Endanschlag-Dämpfungsbaugruppe 32 im Zahnstangengehäuse 30 in axialer Richtung begrenzt verschieblich am Zahnstangengehäuse 30 montiert ist. Dabei stützt sich das Anschlagelement 36 in einer ersten Axialrichtung 38 zumindest teilweise über den Kompressionskörper 34 an einer ersten Abstützfläche 40 des Zahnstangengehäuses 30 und in einer entgegengesetzten zweiten Axialrichtung 42 an einer zweiten Abstützfläche 44 des Zahnstangengehäuses 30 ab.

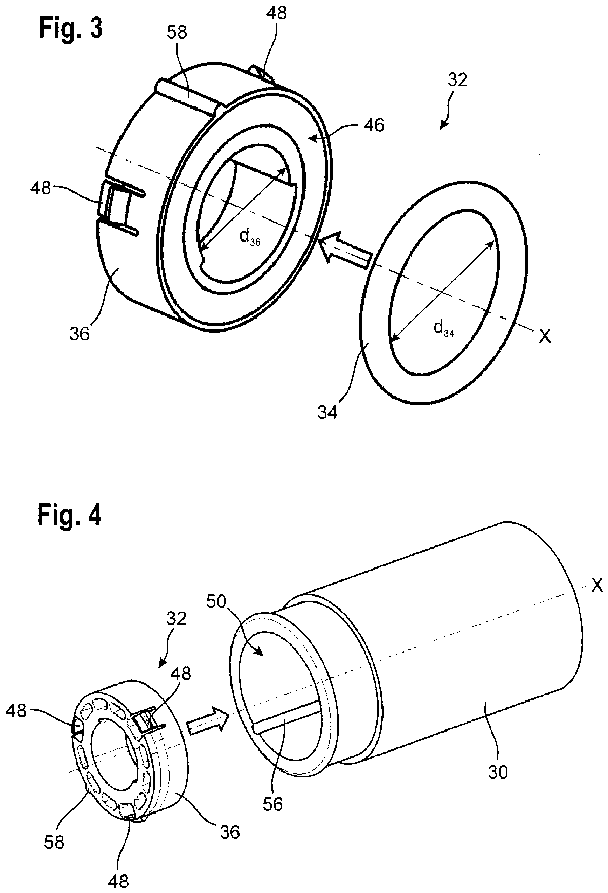

Die Figur 3 zeigt die Endanschlag-Dämpfungsbaugruppe 32 der Zahnstangenlenkung 10 in einer perspektivischen Explosionsansicht. Dabei wird deutlich, dass der Kompressionskörper 34 und das Anschlagelement 36 ringförmig ausgebildet und konzentrisch zur Längsachse X angeordnet sind.

Im zusammengesetzten Zustand der Endanschlag-Dämpfungsbaugruppe 32 ist der als Kompressionsring ausgebildete Kompressionskörper 34 in einer als umlaufenden Nut ausgebildeten, stirnseitigen axialen Vertiefung 46 des Anschlagelements 36 aufgenommen und ragt axial über das Anschlagelement 36 hinaus, wie in den Figuren 2, 5 und 6 zu sehen ist.

Entsprechend ist ein Innendurchmesser d36 des ringförmigen Anschlagelements 36 kleiner als ein Innendurchmesser d₃₄ des ringförmigen Kompressionskörpers 34. Der Kompressionskörper 34 ist folglich vor einem Kontakt mit der Zahnstange 20 und einem damit einhergehenden, unerwünschten Verschleiß geschützt. Hingegen weist das Anschlagelement 36 den geringsten radialen Abstand zur Zahnstange 20 auf und ist insbesondere als Hilfsabstützung ausgebildet, die eine Biegung der Zahnstange 20 begrenzt. Es ist hervorzuheben, dass diese Hilfsabstützung bei unbelasteter Zahnstange 20 nicht an der Zahnstange 20 anliegt, sondern umlaufend ein radiales Spiel von mindestens 0,2 mm aufweist. Durch den umlaufenden Spalt ist die Hilfsabstützung keine zusätzliche permanente Lagerung oder Führung, sodass die Zahnstange 20 weiter statisch bestimmt gelagert ist. Für den Fall, dass eine Durchbiegung der Zahnstange 20 im Bereich der Hilfsabstützung dieses Spaltmaß überschreitet, kommt die Zahnstange 20 in Anlage mit dem Anschlagelement 36, welches dann ein weiteres Durchbiegen der Zahnstange 20 und somit eine mögliche Beschädigung der Zahnstangenlenkung 10 weitgehend verhindert.

Das Anschlagelement 36 ist im vorliegenden Ausführungsbeispiel ein fertigungstechnisch einfach und preiswert herstellbarer Kunststoffring. Bei geeigneter Wahl des Kunststoffmaterials, zum Beispiel Polyamid, ist das Anschlagelement 36 hinreichend robust, um den im Betrieb der Zahnstangenlenkung 10 auftretenden Beanspruchungen zuverlässig und dauerhaft standzuhalten.

Der als Kompressionsring ausgebildete Kompressionskörper 34 ist hingegen aus einem Elastomer hergestellt, insbesondere aus Gummi oder Polyurethan. Verglichen mit dem Anschlagelement 36 ist der Kompressionskörper 34 somit deutlich verschleißanfälliger in Bezug auf Reibungs- oder Torsionsbeanspruchungen. Bei im Wesentlichen axialer Beanspruchung weist der elastische Kompressionskörper 34 hingegen dauerhaft weitgehend konstante Dämpfungseigenschaften auf.

Zur Fixierung des Kompressionskörpers 34 am Anschlagelement 36 kann der Kompressionskörper 34 mit dem Anschlagelement 36 reibschlüssig verbunden und/oder verklebt und/oder verrastet sein.

In der Ausführungsform gemäß den Figuren 2 bis 6 ist der Kompressionskörper 34 konkret ein Gummiring, welcher bei der Montage am Anschlagelement 36 in die als Nut ausgeführte Vertiefung 46 des Anschlagelements 36 einschnappt. Hierzu kann an einem Rand der Nut des Anschlagelements 36 wenigstens eine (nicht dargestellte) Rastnase angeformt sein. Die Dämpfungseigenschaften der Endanschlag-Dämpfungsbaugruppe 32 lassen sich in diesem Fall beispielsweise über den Querschnitt und die Materialhärte des Kompressionskörpers 34 beeinflussen.

In einer alternativen Ausführungsform ist der Kompressionskörper 34 ein im Querschnitt rechteckiger Polyurethanring, der reibschlüssig in die Nut eingedrückt und/oder in der Nut mit dem Anschlagelement 36 verklebt ist. Auch in diesem Fall können die Dämpfungseigenschaften der Endanschlag-Dämpfungsbaugruppe 32 über den Querschnitt und die Materialhärte des Kompressionskörpers 34 beeinflusst werden. Ferner können in dem Polyurethanring Aussparungen vorgesehen sein, die zu einer "weicheren" Dämpfung eines Endanschlags der Zahnstangenlenkung 10 führt.

Gemäß den Figuren 2 und 3 weist das als Anschlagring ausgeführte Anschlagelement 36 elastisch verformbare Rastelemente 48 auf und bildet mit dem Zahnstangengehäuse 30 eine Rastverbindung aus. Die Rastelemente 48 sind dabei an einer radialen Außenseite des ringförmigen Anschlagelements 36 gleichmäßig über dessen Ringumfang verteilt angeordnet und stehen radial nach außen vor.

Das Zahnstangengehäuse 30 hat eine zylindrische Öffnung 50 zur Aufnahme der Zahnstange 20, wobei in der Öffnung 50 wenigstens eine radiale Ausnehmung 52 ausgebildet ist, in welche sich die Rastelemente 48 des Anschlagelements 36 erstrecken. Um den Fertigungsaufwand zu reduzieren ist die radiale Ausnehmung 52 in der Öffnung 50 insbesondere eine umlaufende Nut, deren Nutflanke 54 die zweite Abstützfläche 44 des Zahnstangengehäuses 30 bildet.

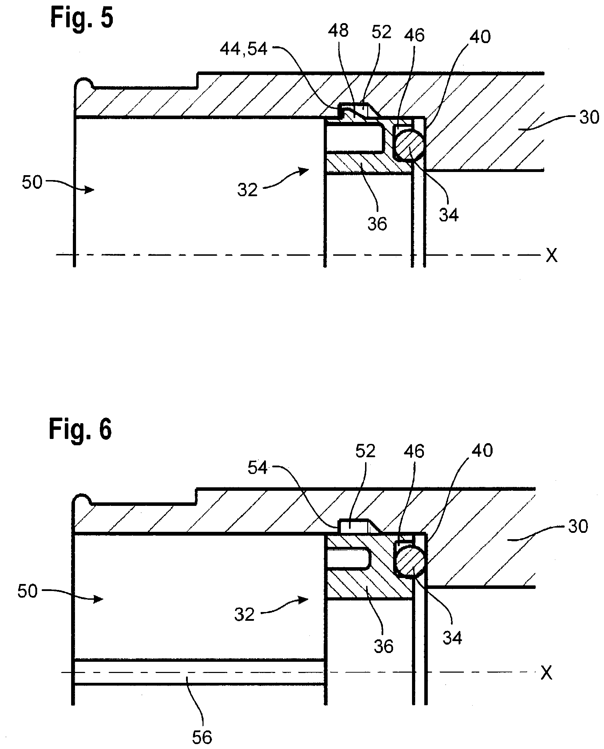

Während einer Montage der zusammengesetzten Endanschlag-Dämpfungsbaugruppe 32 am Zahnstangengehäuse 30 gemäß Figur 4 verformen sich die Rastelemente 48 beim Einführen des Anschlagelements 36 in die Öffnung 50 des Zahnstangengehäuses 30 zunächst radial nach innen, bevor sie bei Erreichen der nutförmigen Ausnehmung 52 radial nach außen schnappen und in die radiale Ausnehmung 52 eingreifen, wie in den Figuren 2 und 5 dargestellt.

Die Figur 5 zeigt einen Detailschnitt der Zahnstangenlenkung 10 im Bereich eines Rastelements 48 der Endanschlag-Dämpfungsbaugruppe 32, wohingegen in Figur 6 ein entsprechender Detailschnitt der Zahnstangenlenkung 10 außerhalb der Rastelemente 48 dargestellt ist.

Anhand der Figur 5 wird deutlich, dass das am Zahnstangengehäuse 30 montierte Anschlagelement 36 durch den Kompressionskörper 34 axial gegen die zweite Abstützfläche 44 vorgespannt ist. Diese Vorspannung verhindert ein axiales Spiel zwischen der Endanschlag-Dämpfungsbaugruppe 32 und dem Zahnstangengehäuse 30 und gewährleistet, dass die Endanschlag-Dämpfungsbaugruppe 32 im Zahnstangengehäuse 30 stets eine fest definierte, axiale Position einnimmt.

Mit Bezug auf die Längsachse X ist das Anschlagelement 36 im Wesentlichen drehfest im Zahnstangengehäuse 30 fixiert. Diese drehfeste Verbindung zwischen dem Anschlagelement 36 und dem Zahnstangengehäuse 30 wird im vorliegenden Ausführungsbeispiel dadurch realisiert, dass in der Öffnung 50 des Zahnstangengehäuses 30 eine Axialnut 56 (Figur 4) vorgesehen ist und das Anschlagelement 36 eine radial nach außen vorstehende Rippe 58 (Figur 3) aufweist, welche sich in axialer Richtung erstreckt und bei der Montage der Endanschlag-Dämpfungsbaugruppe 32 am Zahnstangengehäuse 30 in die Axialnut 56 eingreift. Somit ist das Anschlagelement 36 bei der Montage der Endanschlag-Dämpfungsbaugruppe 32 in der zylindrischen Öffnung 50 des Zahnstangengehäuses 30 drehfest in axialer Richtung geführt. Nach dem Einschnappen der Rastelemente 48 in der radialen Ausnehmung 52 ist das Anschlagelement 36 dann in axialer Richtung begrenzt verschieblich sowie im Wesentlichen drehfest am bzw. im Zahnstangengehäuse 30 montiert.

Die drehfeste Fixierung des Anschlagelements 36 am Zahnstangengehäuse 30 stellt sicher, dass ein von der Zahnstange 20 im Endanschlag der Zahnstangenlenkung 10 aufgebrachtes Torsionsmoment von dem vergleichsweise robusten Anschlagelement 36 unmittelbar und nicht über den in Bezug auf Torsionsbeanspruchungen verschleißanfälligen Kompressionskörper 34 in das Zahnstangengehäuse 30 eingeleitet wird. Der Kompressionskörper 34 wird allenfalls axial belastet und sorgt dabei dauerhaft für eine zuverlässige Endanschlagdämpfung.

Eine Axialverschiebung des im Zahnstangengehäuse 30 montierten Anschlagelements 36 relativ zum Zahnstangengehäuse 30 ist durch die erste Abstützfläche 40 und die zweite Abstützfläche 44 des Zahnstangengehäuses 30 begrenzt, wobei das Anschlagelement 36 in seiner ersten axialen Endstellung (Endanschlag der Zahnstangenlenkung 10) an der ersten Abstützfläche 40 und in seiner entgegengesetzten zweiten axialen Endstellung (dargestellt in den Figuren 2 und 5) an der zweiten Abstützfläche 44 anliegt. Dabei erstrecken sich die erste axiale Abstützfläche 40 und die zweite axiale Abstützfläche 44 im Wesentlichen senkrecht zur Längsachse X. Auf diese Weise ist sichergestellt, dass eine axiale Beaufschlagung der Endanschlag-Dämpfungsbaugruppe 32 nicht zu unerwünschten Radialkräften in der Endanschlag-Dämpfungsbaugruppe 32 führt.

Das Anschlagelement 36 ist im dargestellten Ausführungsbeispiel ein Kontaktring, der im axialen Endanschlag der Zahnstangenlenkung 10 stirnseitig mit der Zahnstange 20 oder einem fest mit der Zahnstange 20 verbundenen Bauteil 60 in Kontakt kommt.

Gemäß Figur 2 befindet sich die Zahnstangenlenkung 10 nahe einer axialen Endanschlagstellung. Das fest mit der Zahnstange 20 verbundene Bauteil 60 ist bereits mit dem Anschlagelement 36 der Endanschlag-Dämpfungsbaugruppe 32 in Kontakt, wobei der Kompressionskörper 34 jedoch noch keine Kompression durch eine Axialkraft in der Zahnstange 20 erfahren hat. Dies ist daran ersichtlich, dass das Anschlagelement 36, konkret die Rastelemente 48 des Anschlagelements 36, aufgrund der Vorspannung des Kompressionskörpers 34 noch an der zweiten Abstützfläche 44 des Zahnstangengehäuses 30 anliegen.

Wird nun die Zahnstange 20 sowie das fest mit der Zahnstange 20 verbundene Bauteil 60, das Kugelgelenk 28 und die Spurstange 24 axial weiter in Richtung zum Endanschlag der Zahnstangenlenkung 10 bewegt (gemäß Figur 2 nach links), so wird diese Bewegung durch den Kompressionskörper 34 gedämpft, bis das Anschlagelement 36 schließlich in der axialen Endanschlagstellung der Zahnstangenlenkung 10 den Kompressionskörper 34 maximal komprimiert hat und an der ersten Abstützfläche 40 des Zahnstangengehäuses 30 anliegt.

Sobald die Zahnstangenlenkung 10 wieder in Richtung einer Mittenstellung der lenkbaren Räder 26 (entspricht einer Geradeausfahrt des Fahrzeugs) bewegt wird, weitet sich der elastische Kompressionskörper wieder auf und verschiebt das Anschlagelement 36 wieder in seine zweite axiale Endstellung gemäß den Figuren 2 und 5, in der das Anschlagelement 36, konkret die Rastelemente 48 des Anschlagelements 36, an der zweiten Abstützfläche 44 des Zahnstangengehäuses 30 anliegen.

Im Fahrzeugbetrieb gewährleistet die beschriebene Endanschlag-Dämpfungsbaugruppe 32 eine zuverlässige Dämpfung bei maximalem Lenkeinschlag der Zahnstangenlenkung 10. Darüber hinaus schützt die Endanschlag-Dämpfungsbaugruppe 32 die Zahnstangenlenkung 10, insbesondere den Kugelgewindetrieb 21 und das Vierpunktlager der Kugelumlaufmutter 23, auch bei einer sogenannten Fehlnutzung der Zahnstangenlenkung 10 vor Beschädigungen. Eine solche Fehlnutzung kann beispielsweise beim Radwechsel auftreten, wenn bei angehobenem Fahrzeug ein Rad 26 oder eine Radaufnahme der lenkbaren Fahrzeugachse schwungartig verschwenkt und die dadurch axial beschleunigte Zahnstange 20 im mechanischen Endanschlag abrupt gestoppt wird. Die auftretende Beanspruchung der Zahnstangenlenkung 10 im Endanschlag wird durch den Elektromotor 16 noch verstärkt, da dieser beim Verschwenken des Rads 26 oder der Radaufnahme passiv angetrieben wird und dann aufgrund seiner Massenträgheit bestrebt ist, weiter zu rotieren. Die vorgeschlagene Endanschlag-Dämpfungsbaugruppe 32 verhindert in diesem Fall ein abruptes Abbremsen der Zahnstange 20 im mechanischen Endanschlag der Zahnstangenlenkung 10 und schützt damit insbesondere den Kugelgewindetrieb 21 und das Vierpunktlager der Kugelumlaufmutter 23 vor übermäßiger Beanspruchung und Beschädigung.

## Patentansprüche

1. Zahnstangenlenkung für Kraftfahrzeuge, mit
einer Zahnstange (20), die eine Längsachse (X) aufweist,
einem Zahnstangengehäuse (30), in dem die Zahnstange (20) axial verschieblich geführt ist, sowie
wenigstens einer im Zahnstangengehäuse (30) aufgenommenen Endanschlag-Dämpfungsbaugruppe (32) für die Zahnstange (20),
wobei die Endanschlag-Dämpfungsbaugruppe (32) einen Kompressionskörper (34) zur Dämpfung eines Endanschlags sowie ein Anschlagelement (36) aufweist, das in axialer Richtung begrenzt verschieblich am Zahnstangengehäuse (30) montiert ist, und
wobei sich das Anschlagelement (36) in einer ersten Axialrichtung (38) zumindest teilweise über den Kompressionskörper (34) an einer ersten Abstützfläche (40) des Zahnstangengehäuses (30) abstützt,
**dadurch gekennzeichnet, dass**
sich das Anschlagelement (36) in einer entgegengesetzten zweiten Axialrichtung (42) an einer zweiten Abstützfläche (44) des Zahnstangengehäuses (30) abstützt, wobei eine axiale Verschiebung des montierten Anschlagelements (36) durch die erste Abstützfläche (40) und die zweite Abstützfläche (44) des Zahnstangengehäuses (30) begrenzt ist, und wobei das Anschlagelement (36) in seiner ersten axialen Endstellung an der ersten Abstützfläche (40) und in seiner entgegengesetzten zweiten axialen Endstellung an der zweiten Abstützfläche (44) anliegt.

2. Zahnstangenlenkung nach Anspruch 1, **dadurch gekennzeichnet, dass** das Anschlagelement (36) ein Kontaktring ist, der in einer axialen Endanschlagstellung der Zahnstangenlenkung (10) stirnseitig mit der Zahnstange (20) oder einem fest mit der Zahnstange (20) verbundenen Bauteil (60) in Kontakt kommt.

3. Zahnstangenlenkung nach einem der vorhergehenden Ansprüche, **dadurch gekennzeichnet, dass** das Anschlagelement (36) Rastelemente (48) aufweist und mit dem Zahnstangengehäuse (30) eine Rastverbindung ausbildet.

4. Zahnstangenlenkung nach Anspruch 3, **dadurch gekennzeichnet, dass** das Zahnstangengehäuse (30) eine zylindrische Öffnung (50) zur Aufnahme der Zahnstange (20) hat, wobei in der Öffnung (50) wenigstens eine radiale Ausnehmung (52) ausgebildet ist, in welche sich die Rastelemente (48) des Anschlagelements (36) erstrecken.

5. Zahnstangenlenkung nach Anspruch 4, **dadurch gekennzeichnet, dass** die radiale Ausnehmung (52) in der Öffnung (50) des Zahnstangengehäuses (30) als umlaufende Nut ausgebildet ist und eine Nutflanke (54) dieser Nut die zweite Abstützfläche (44) bildet.

6. Zahnstangenlenkung nach einem der vorhergehenden Ansprüche, **dadurch gekennzeichnet, dass** sich die erste axiale Abstützfläche (40) und/oder die zweite axiale Abstützfläche (44) im Wesentlichen senkrecht zur Längsachse (X) erstrecken.

7. Zahnstangenlenkung nach einem der vorhergehenden Ansprüche, **dadurch gekennzeichnet, dass** das montierte Anschlagelement (36) durch den Kompressionskörper (34) axial gegen die zweite Abstützfläche (44) vorgespannt ist.

8. Zahnstangenlenkung nach einem der vorhergehenden Ansprüche, **dadurch gekennzeichnet, dass** der Kompressionskörper (34) in einer stirnseitigen axialen Vertiefung (46) des Anschlagelements (36) aufgenommen ist und axial über das Anschlagelement (36) hinausragt.

9. Zahnstangenlenkung nach einem der vorhergehenden Ansprüche, **dadurch gekennzeichnet, dass** das Anschlagelement (36) als Hilfsabstützung ausgebildet ist und eine Biegung der Zahnstange (20) begrenzt.

10. Zahnstangenlenkung nach einem der vorhergehenden Ansprüche, **dadurch gekennzeichnet, dass** das Anschlagelement (36) bezüglich der Längsachse (X) im Wesentlichen drehfest im Zahnstangengehäuse (30) fixiert ist.

11. Zahnstangenlenkung nach einem der vorhergehenden Ansprüche, **dadurch gekennzeichnet, dass** das Anschlagelement (36) ein Kunststoffring ist und/oder der Kompressionskörper (34) aus einem Elastomer hergestellt ist.

12. Zahnstangenlenkung nach einem der vorhergehenden Ansprüche, **dadurch gekennzeichnet, dass** der Kompressionskörper (34) und das Anschlagelement (36) ringförmig ausgebildet und konzentrisch zur Längsachse (X) angeordnet sind.

13. Zahnstangenlenkung nach Anspruch 12, **dadurch gekennzeichnet, dass** ein Innendurchmesser (d₃₆) des ringförmigen Anschlagelements (36) kleiner als ein Innendurchmesser (d₃₄) des ringförmigen Kompressionskörpers (34) ist.

14. Zahnstangenlenkung nach einem der vorhergehenden Ansprüche, **dadurch gekennzeichnet, dass** der Kompressionskörper (34) mit dem Anschlagelement (36) reibschlüssig verbunden und/oder verklebt und/oder verrastet ist.

## Claims

1. A rack-and-pinion steering for a motor vehicle, comprising
a rack (20) having a longitudinal axis (X),
a rack housing (30) in which the rack (20) is guided for axial displacement, and at least one end stop damping assembly (32) for the rack (20), the end stop damping assembly (32) being received in the rack housing (30),
the end stop damping assembly (32) including a compression body (34) for damping an end stop and a stop member (36) which is mounted to the rack housing (30) for limited displacement in the axial direction, and
the stop member (36) resting against a first supporting surface (40) of the rack housing (30) at least partly by means of the compression body (34) in a first axial direction (38),
**characterized in that**
the stop member (36) rests against a second supporting surface (44) of the rack housing (30) in an opposite, second axial direction (42),
an axial displacement of the stop member (36) in the mounted condition being limited by the first supporting surface (40) and the second supporting surface (44) of the rack housing (30), and
the stop member (36) resting against the first supporting surface (40) in its first axial end position and against the second supporting surface (44) in its opposite, second axial end position.

2. The rack-and-pinion steering according to claim 1, **characterized in that** the stop member (36) is a contact ring which, in an axial end stop position of the rack-and-pinion steering (10), comes into contact on its front face with the rack (20) or with a part (60) that is firmly connected with the rack (20).

3. The rack-and-pinion steering according to either of the preceding claims, **characterized in that** the stop member (36) includes detent elements (48) and produces a detent connection with the rack housing (30).

4. The rack-and-pinion steering according to claim 3, **characterized in that** the rack housing (30) has a cylindrical opening (50) for receiving the rack (20), the opening (50) having at least one radial recess (52) formed therein into which the detent elements (48) of the stop member (36) extend.

5. The rack-and-pinion steering according to claim 4, **characterized in that** the radial recess (52) in the opening (50) of the rack housing (30) is formed as a circular groove, and a groove flank (54) of said groove constitutes the second supporting surface (44).

6. The rack-and-pinion steering according to any of the preceding claims, **characterized in that** the first axial supporting surface (40) and/or the second axial supporting surface (44) extend substantially perpendicularly to the longitudinal axis (X).

7. The rack-and-pinion steering according to any of the preceding claims, **characterized in that** the stop member (36) in the mounted condition is axially pretensioned against the second supporting surface (44) by the compression body (34).

8. The rack-and-pinion steering according to any of the preceding claims, **characterized in that** the compression body (34) is received in an axial depression (46) in the front face of the stop member (36) and projects axially beyond the stop member (36).

9. The rack-and-pinion steering according to any of the preceding claims, **characterized in that** the stop member (36) is configured as an auxiliary support and limits a bending of the rack (20).

10. The rack-and-pinion steering according to any of the preceding claims, **characterized in that** the stop member (36) is fixed within the rack housing (30) substantially non-rotationally in relation to the longitudinal axis (X).

11. The rack-and-pinion steering according to any of the preceding claims, **characterized in that** the stop member (36) is a plastic ring and/or the compression body (34) is made from an elastomer.

12. The rack-and-pinion steering according to any of the preceding claims, **characterized in that** the compression body (34) and the stop member (36) are formed to be ring-shaped and are arranged concentrically with the longitudinal axis (X).

13. The rack-and-pinion steering according to claim 12, **characterized in that** an inside diameter (d₃₆) of the ring-shaped stop member (36) is smaller than an inside diameter (d₃₄) of the ring-shaped compression body (34).

14. The rack-and-pinion steering according to any of the preceding claims, **characterized in that** the compression body (34) is connected with the stop member (36) by a frictional connection and/or an adhesive bond and/or a detent connection.

## Revendications

1. Direction à crémaillère pour véhicules automobiles, comportant
une crémaillère (20) qui présente un axe longitudinal (X),
un boîtier de crémaillère (30) dans lequel la crémaillère (20) est guidée pour un déplacement axial, et
au moins un ensemble (32) d'amortissement de butée d'extrémité pour la crémaillère (20), qui est reçu dans le boîtier de crémaillère (30),
l'ensemble (32) d'amortissement de butée d'extrémité présentant un corps de compression (34) pour l'amortissement d'une butée d'extrémité et un élément de butée (36) qui est monté sur le boîtier de crémaillère (30) pour un déplacement limité dans le sens axial, et
l'élément de butée (36) s'appuyant dans un premier sens axial (38) sur une première face d'appui (40) du boîtier de crémaillère (30) au moins partiellement au moyen du corps de compression (34),
**caractérisée en ce que**
l'élément de butée (36) s'appuie dans un deuxième sens axial opposé (42) sur une deuxième face d'appui (44) du boîtier de crémaillère (30),
un déplacement axial de l'élément de butée (36) monté étant limité par la première face d'appui (40) et par la deuxième face d'appui (44) du boîtier de crémaillère (30), et
l'élément de butée (36) reposant contre la première face d'appui (40) dans sa première position d'extrémité axiale et contre la deuxième face d'appui (44) dans sa deuxième position d'extrémité axiale opposée.

2. Direction à crémaillère selon la revendication 1, **caractérisée en ce que** l'élément de butée (36) est un anneau de contact qui, dans une position de butée d'extrémité axiale de la direction à crémaillère (10), parvient du côté face frontale en contact avec la crémaillère (20) ou avec un composant (60) solidaire de la crémaillère (20).

3. Direction à crémaillère selon l'une des revendications précédentes, **caractérisée en ce que** l'élément de butée (36) présente des éléments d'enclenchement (48) et forme ensemble avec le boîtier de crémaillère (30) une liaison par enclenchement.

4. Direction à crémaillère selon la revendication 3, **caractérisée en ce que** le boîtier de crémaillère (30) présente un orifice cylindrique (50) pour la réception de la crémaillère (20), au moins un évidement radial (52) dans lequel les éléments d'enclenchement (48) de l'élément de butée (36) s'étendent étant réalisé dans l'orifice (50).

5. Direction à crémaillère selon la revendication 4, **caractérisée en ce que** l'évidement radial (52) dans l'orifice (50) du boîtier de crémaillère (30) est réalisé sous forme de gorge périphérique et **en ce qu'**un flanc de gorge (54) de cette gorge forme la deuxième face d'appui (44).

6. Direction à crémaillère selon l'une des revendications précédentes, **caractérisée en ce que** la première face d'appui axiale (40) et/ou la deuxième face d'appui axiale (44) s'étend/s'étendent sensiblement perpendiculairement à l'axe longitudinal (X).

7. Direction à crémaillère selon l'une des revendications précédentes, **caractérisée en ce que** l'élément de butée (36) monté est précontraint axialement contre la deuxième face d'appui (44) par le corps de compression (34).

8. Direction à crémaillère selon l'une des revendications précédentes, **caractérisée en ce que** le corps de compression (34) est reçu dans un creux axial (46) côté face frontale de l'élément de butée (36) et fait axialement saillie de l'élément de butée (36).

9. Direction à crémaillère selon l'une des revendications précédentes, **caractérisée en ce que** l'élément de butée (36) est réalisé sous forme d'appui auxiliaire et limite un fléchissement de la crémaillère (20).

10. Direction à crémaillère selon l'une des revendications précédentes, **caractérisée en ce que** l'élément de butée (36) est fixé de manière sensiblement solidaire en rotation dans le boîtier de crémaillère (30) par rapport à l'axe longitudinal (X).

11. Direction à crémaillère selon l'une des revendications précédentes, **caractérisée en ce que** l'élément de butée (36) est un anneau en plastique et/ou le corps de compression (34) est réalisé en élastomère.

12. Direction à crémaillère selon l'une des revendications précédentes, **caractérisée en ce que** le corps de compression (34) et l'élément de butée (36) sont réalisés de manière annulaire et sont agencés de manière concentrique par rapport à l'axe longitudinal (X).

13. Direction à crémaillère selon la revendication 12, **caractérisée en ce qu'**un diamètre intérieur (d₃₆) de l'élément de butée annulaire (36) est inférieur à un diamètre intérieur (d₃₄) du corps de compression annulaire (34).

14. Direction à crémaillère selon l'une des revendications précédentes, **caractérisée en ce que** le corps de compression (34) est relié et/ou collé et/ou enclenché par frottement avec l'élément de butée (36).
